# EUROPEAN PATENT SPECIFICATION

(11) **EP 3 274 203 B1**
(45) Date of publication and mention of the grant of the patent: **15.12.2021**
(21) Application number: 16712319.9
(22) Date of filing: 24.03.2016
(51) Int. Cl.: B60J 7/12, B60J 7/10, B60J 7/19

(54) **ROOF SYSTEM FOR A VEHICLE**
DACHSYSTEM FÜR EIN FAHRZEUG
SYSTÈME DE TOIT POUR UN VÉHICULE

(30) Priority: 24.03.2015 GB 201504985
(43) Date of publication of application: 31.01.2018
(73) Proprietor: Jaguar Land Rover Limited, Coventry, Warwickshire CV3 4LF (GB)
(72) Inventor: HAYNES, Dan, Warwickshire Coventry CV3 4LF (GB); ELLIS, Stephen, Warwickshire Coventry CV3 4LF (GB)
(74) Representative: Holmes, Matthew William
(86) International application number: PCT/EP2016/056517
(87) International publication number: WO 2016/151076

(56) References cited:
- EP-A1- 2 364 869
- EP-A1- 2 366 572
- DE-A1- 1 680 205
- DE-A1- 4 116 223
- DE-A1-102006 024 353
- DE-A1-102008 036 903
- DE-A1-102009 007 331
- DE-A1-102009 020 941
- DE-A1-102009 035 032
- GB-A- 1 114 960
- US-A1- 2004 066 057

## Description

### FIELD OF THE INVENTION

The present disclosure relates to a removable roof system for a convertible vehicle and to the convertible vehicle itself.

### BACKGROUND OF THE INVENTION

Vehicles which have a removable or retractable roof, often referred to as 'convertible' vehicles, are often two-seater vehicles in which there is no room for seated passengers behind the front vehicle seats used by the driver and his immediate passenger to one side. Early stage convertible vehicles typically included a cover or canvas hood which attached to a frame of the vehicle and which could be removed manually from the vehicle frame by the user when the weather was pleasant. The canvas was formed from a waterproof fabric which could be folded and stored in the vehicle boot or trunk once removed from the frame. Inevitably, such early designs suffered from leakage problems due to the problem of fixing the canvas to the vehicle frame in a water-tight manner. In addition, many systems made use of multiple poppers to secure the fabric to the vehicle frame once the cover was in place on the vehicle. This was a time-consuming and fiddly process for the user every time the vehicle needed to be converted. The appearance of the vehicle once the cover was removed was also prejudiced because the frame supporting the canvas remained on the vehicle and was not necessarily an attractive feature of the vehicle without the cover fitted. As car design has evolved and the aesthetics of vehicles has become an increasingly important factor in the consumer buying decision, particularly for more expensive vehicle such as sports cars, such early stage convertible vehicle designs have become outdated.

In more recent times, more sophisticated automated roof retraction systems have been widely used to enable the movement of a multi-layer canvas hood, or a hard-material roof, into and out of the vehicle boot to convert the vehicle from an open-top to a closed-top. The automated retraction system provides the convenience of a user in the cabin being able to control the status of the vehicle roof without leaving their seat. Furthermore, in modern-day vehicles, the materials used for such canvas roofs are incredibly robust and reliable in terms of leakage. For retractable hard-top vehicles leakage problems can be avoided altogether, albeit at the expense of considerable additional vehicle weight for the roof mechanism.

Although such automated systems are increasingly popular, they therefore suffer from the disadvantage of high weight and large size due to the complex mechanical parts which are required for the roof retraction mechanism. These parts also introduce additional cost to the vehicle, as well as an additional factor for component reliability. Especially for sophisticated and lightweight sports cars, the increased weight factor is prohibitive as performance of the vehicle is adversely affected by the weight, and the size of the roof retraction mechanism cannot be accommodated within the limited boot space. On these vehicles in particular there remains the need for a removable or detachable roof system which substantially avoids leakage problems whilst maintaining low vehicle weight for enhanced performance.

For further information relating to roof systems for convertible vehicles, the reader is directed to DE-10-2009-007331 which describes a detachable roof system for a convertible vehicle in which a roof top cloth is tensioned by clamping means. Other examples of prior art are DE 1 680 205 and GB 1 114 960.

It is one object of the invention to provide a roof system for a vehicle which addresses one or more of these issues.

### STATEMENTS OF INVENTION

Aspects and embodiments of the invention are set out in the accompanying claims.

The invention is defined by independent claim 1.

According to one aspect of the invention, there is provided a detachable roof system for a convertible vehicle having an open state in which a vehicle cabin is open at the top and a closed state in which the vehicle cabin is closed; the roof system including a front frame which is removably mountable to the vehicle at the front of the vehicle cabin; a foldable or rollable hood for covering the cabin in the closed state, wherein the hood is attached permanently to the front frame; and a rear frame, separate from the front frame, which is removably mountable to the vehicle at the rear of the vehicle cabin, the rear frame including an integral panel which forms a rear window of the vehicle when the rear frame is mounted on the vehicle, wherein the rear frame provides a rigid support for the hood which spans the rear frame when the hood covers the cabin, and wherein the rear frame is not permanently attached to the hood.

The hood is conveniently permanently attached to the front frame so that, when the front frame is removed from the vehicle, the hood is removed with it and can be folded or rolled around the front frame for stowage.

Reference to a detachable or removable roof system is intended to refer to a roof system which can be removed from a vehicle completely, and is not intended to refer to a roof which can be removed from the vehicle to expose the cabin of the vehicle with the roof merely folded back.

It will be appreciated that although the invention has particular benefit when applied to a relatively compact two-seater convertible vehicle, such as a two-seater sports car, it is equally applicable to vehicle having a greater number of seats.

The roof system may include a clamping means configured to apply a clamping force to the rear frame to clamp the rear frame to the vehicle.

The rear frame may comprise a plurality of separate frame sections, each of which is conveniently removable separately and independently from the vehicle when the roof system is to be removed. This allows the roof system to be removed and collapsed for storage within a relatively small storage volume.

In one embodiment, the clamping means may include a coupling means for coupling the frame sections together, the clamping means being configured to apply the clamping force to the coupling means so as to transmit the clamping force through one frame section to another frame section, thereby to clamp both sections to the vehicle. For example, the rear frame may include a central frame section and left- and right-side frame sections.

The coupling means may include a flange provided on each of the left- and right-side frame sections and a flange provided on the central frame section, the flanges being cooperable with one another when the frame sections are placed onto the vehicle so that the clamping force applied to the left- and right- side sections is transmitted to the central frame section. This provides a convenient mechanism for the user to secure the rear frame to the vehicle in a sealing manner with minimal part count, as the clamping force is applied to the central frame section via the left- and right-side sections.

In one embodiment, the clamping means may comprise a first latching mechanism, operable between latched and unlatched states, and a second latching mechanism, operable between latched and unlatched states, the first latching mechanism being associated with the first side frame section and the second latching mechanism being associated with the second side frame section, whereby operation of the first and second latching mechanisms serves to apply the clamping force to the side frame sections.

Each of the first and second latching mechanisms may include a resiliently-biased pin which, when in the latched state, engages with a latch receiver provided on the vehicle, the pin being resiliently biased into the unlatched state.

The first and second latching mechanisms may include a handle which is operable to cause movement of the pin between the latched and unlatched states through an intermediate linkage. The handle can be conveniently operated by a user within the cabin, or leaning into the cabin to latch/unlatch the mechanisms.

The rear frame may comprise a seal arrangement for engaging with an upper surface of the vehicle body under the clamping force when the roof system is mounted on the vehicle, thereby to form a substantially fluid-tight seal between the seal arrangement and the vehicle.

The seal arrangement may include one or more seal element mounted on each of the frame sections. The or each seal element conveniently takes the form of a bubble seal, which is a familiar component in automotive applications.

The rear frame may comprise means configured to prevent outward transverse movement of the roof system relative to the vehicle when the roof system is fitted on the vehicle.

The means may be further configured to prevent forward movement of the rear frame relative to the vehicle when the roof system is fitted to the vehicle.

By way of example, said means may include a foot located at an outer edge of the rear frame on the left and right sides thereof, each foot being cooperable with an upper lid of the vehicle when the roof system is fitted to the vehicle, in use, to prevent said movement.

The roof system may comprise at least two locating features for engagement with cooperable locating features on the vehicle to locate the rear frame in position on the vehicle.

Conveniently, to reduce part count the pins of the first and second latching mechanisms may form the locating features.

The front frame may be a foldable frame and may include a double hinge assembly configured to permit one half of the front frame to be folded double with the other half of the front frame.

The rear frame may be formed from a carbon fibre material, which has the benefit of being of high strength, but lightweight.

The integral panel may be formed from a polycarbonate material, which is a rigid material which provides better visibility than the typical plastic materials commonly used on convertible roofs.

The hood may include a main portion which covers the vehicle cabin when the roof system is fitted to the vehicle, and left- and right-side wings which extend rearward from the main portion for attachment to left- and right-side tethering points of the vehicle when the roof system is fitted to the vehicle.

In another aspect of the invention, there is provided a detachable roof system for a convertible vehicle having an open state in which a vehicle cabin is open and a closed state in which the vehicle cabin is closed; the roof system including a front frame which is removably mountable to the vehicle at the front of the vehicle cabin; a rear frame, separate from the front frame, which is removably mountable to the vehicle at the rear of the vehicle cabin and comprises at least two separate frame sections, and a clamping means configured to apply a clamping force to one of the frame sections and to transmit the clamping force through the or each of the other frame sections so as to clamp the entire frame to the vehicle.

In another aspect there is provided a detachable roof system for a convertible vehicle having an open state in which a vehicle cabin is open and a closed state in which the vehicle cabin is closed; the roof system including a front frame which is removably mountable to the vehicle at the front of the vehicle cabin; a rear frame, separate from the front frame, which is removably mountable to the vehicle at the rear of the vehicle cabin, wherein the rear frame may comprise means, typically in the form of left- and right-side feet for engagement with the vehicle body, in use, configured to prevent outward transverse movement of the roof system relative to the vehicle when the roof system is fitted on the vehicle.

In another aspect, there is provided a detachable roof system for a convertible vehicle having an open state in which a vehicle cabin is open and a closed state in which the vehicle cabin is closed; the roof system including a front frame which is removably mountable to the vehicle at the front of the vehicle cabin; a rear frame, separate from the front frame, which is removably mountable to the vehicle at the rear of the vehicle cabin, wherein the front frame may be a foldable frame and may include a double hinge assembly configured to permit one half of the front frame to be folded double with the other half of the front frame.

In another aspect, there is provided a detachable roof system for a convertible vehicle (10) having an open state in which a vehicle cabin is open and a closed state in which the vehicle cabin is closed; the roof system including: a rear frame (60, which is removably mountable to the vehicle at the rear of the vehicle cabin, the rear frame including an integral panel (76) which forms a rear window of the vehicle when the rear frame is mounted on the vehicle, and a hood (34) attachable to the vehicle at the front of the vehicle cabin and arranged to cover the cabin in the closed state; wherein the rear frame (60) provides a support for the hood (34) which spans the rear frame (60) when the hood (34) covers the cabin.

In an embodiment the system comprises a front frame which is removably mountable to the vehicle at the front of the vehicle cabin and the hood (34) is attached permanently to the front frame (30).

According to a further aspect of the invention, there is provided a convertible vehicle provided with a detachable roof system of one of the previous aspects of the invention. The convertible vehicle may have one or more fairing and/or one or more roll hoop located behind the driver and passenger seats with which the rear frame of the roof system engages in a sealing manner.

### BRIEF DESCRIPTION OF THE DRAWINGS

One or more embodiments of the invention will now be described, by way of example only, with reference to the accompanying drawings, in which:
Figure 1 is a rear view of a two-seater sports-car with a removable roof system of the vehicle in place;
Figure 2 is a rear view of the sports car in Figure 1, with the roof removed from the vehicle;
Figure 3 is a view from the underside of the roof system for the vehicle in Figures 1 and 2;
Figure 4 is a top view of the roof system for the vehicle in Figures 1 and 2;
Figure 5 is a side view of a front frame of the roof system in Figures 1 and 2;
Figure 6 is a view, from the underside, of the front frame of the roof system in Figure 5;
Figure 7 is a front view of a rear frame of the roof system in Figures 3 to 6;
Figure 8 is a rear view of the rear frame of the roof system in Figure 7;
Figure 9 is an exploded rear view of the rear frame in Figures 7 and 8;
Figure 10 is an exploded front view of the rear frame in Figures 7 and 8;
Figures 11, 12, 13 and 14 show enlarged views, in more detail, of areas of the rear frame indicated in Figure 10;
Figure 15 is an isometric view of the rear frame in Figures 7 and 8;
Figure 16 is an enlarged view, in more detail, of a first latching mechanism of the rear frame shown in Figure 15, with the mechanism in a locked or closed position;
Figure 17 is an enlarged view, in more detail, of a second latching mechanism of the rear frame shown in Figure 15, with the mechanism in an unlocked or open position;
Figure 18 is a top view of a receiver for the latching mechanisms in Figures 16 and 17;
Figure 19 is an underside view of the receiver in Figure 18;
Figure 20 is a rear view of the frame of the roof system, being a similar view to that shown in Figure 8;
Figure 21 is a section C-C through the frame in Figure 20;
Figure 22 is a section D-D through the frame in Figure 20; and
Figure 23 is a perspective view of a tensioner for the hood of the roof system in Figures 2 to 21.

In the following description, references to left and right side are made from the front perspective of vehicle, but such references are not intended to be limiting.

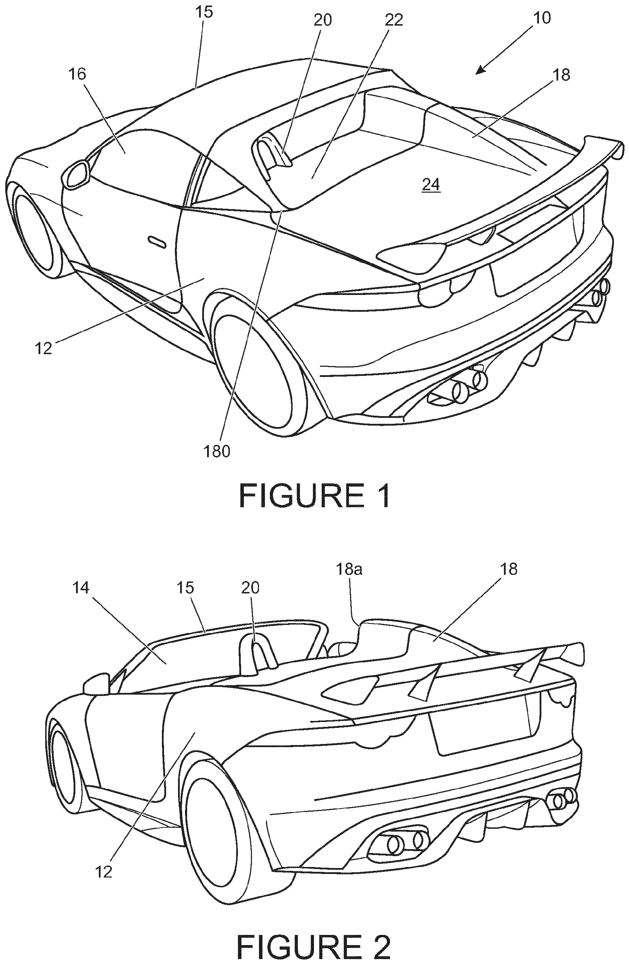

Figures 1 and 2 show a convertible vehicle 10 in the form of a two-seater sports car having a vehicle body 12, a front windscreen 14 having a windscreen frame 15 and left- and right-side windows (only one of which, window 16, is visible in the figures). The vehicle 10 is manufactured with an open top but may be fitted with a roof system in accordance with embodiments of the present invention. The vehicle 10 has two seats in the form of a driver's seat and a passenger seat. A structure in the form of a fairing or 'haunch' 18 is provided behind the driver's seat. The fairing 18 is an elongate structure which has an arc-shaped front end (identified at 18a) and tapers towards the rear of the vehicle to blend with the upper surface of the vehicle on the driver's side.

In a similar manner to the fairing 18, a roll hoop 20 is provided behind the passenger seat which protects the passenger in the event of a vehicle roll over. The roll hoop 20 is of generally similar shape to the front end 18a of the fairing 18, taking the form of an arc or 'hoop', but has a slightly narrower width than the fairing. The roll hoop 20 may be a deployable roll hoop which is normally hidden within the body of the vehicle. In the event that an imminent rollover is detected, the roll hoop deploys into the position shown.

Modifications of the vehicle with which the roof system of the invention may be used include vehicles having two roll hoops, one behind the driver and one behind the passenger, without a fairing, or vehicles including two fairings. The roof system could also be used on a vehicle without a fairing or a roll hoop, without modification to the key features of the invention.

Just rearward of the fairing front end 18a and the roll hoop 20 is a deck lid 22 forming part of the upper surface of the vehicle bodywork. The deck lid 22 provides an immovable cover for a stowage space (not visible) located beneath the deck lid. The storage volume beneath the deck lid 22 is a convenient volume to accommodate the roof system when removed from the vehicle and placed in a stowed state. Further rearward of the stowage space for the roof system is a vehicle trunk (not identified) which resides beneath an upper trunk lid 24 which also forms a part of the upper surface of the vehicle bodywork. The trunk lid 24 is flush with the deck lid 22 and is pivotally mounted to allow access to the trunk beneath in the manner of a conventional vehicle by lifting or tilting the lid 24 about its rear edge. The storage volume beneath the deck lid and the vehicle trunk are not separate compartments, so that the volume beneath the deck lid 22 is accessible by lifting the trunk lid 24 and reaching through. In a modification, the deck lid 22 could be movable and the compartments could be separate from one another.

The vehicle can be driven when in the status shown in Figure 2, for example in fine weather conditions, with the roof system removed. In the event of bad weather or night driving, for example, if the user wants to cover the vehicle, a roof system in accordance with the invention may be fitted to enclose the vehicle cabin, as shown in Figure 1, so as to provide protection from the elements.

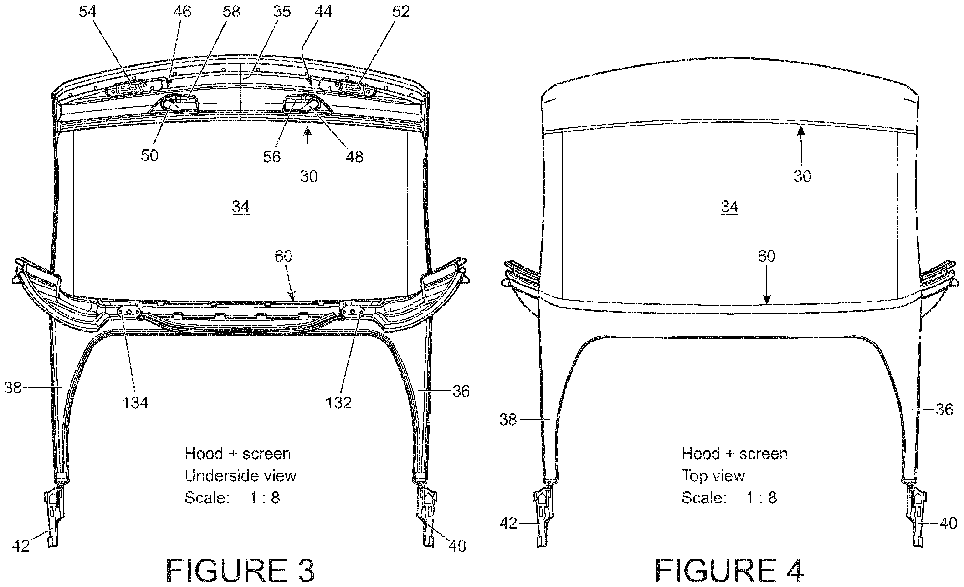

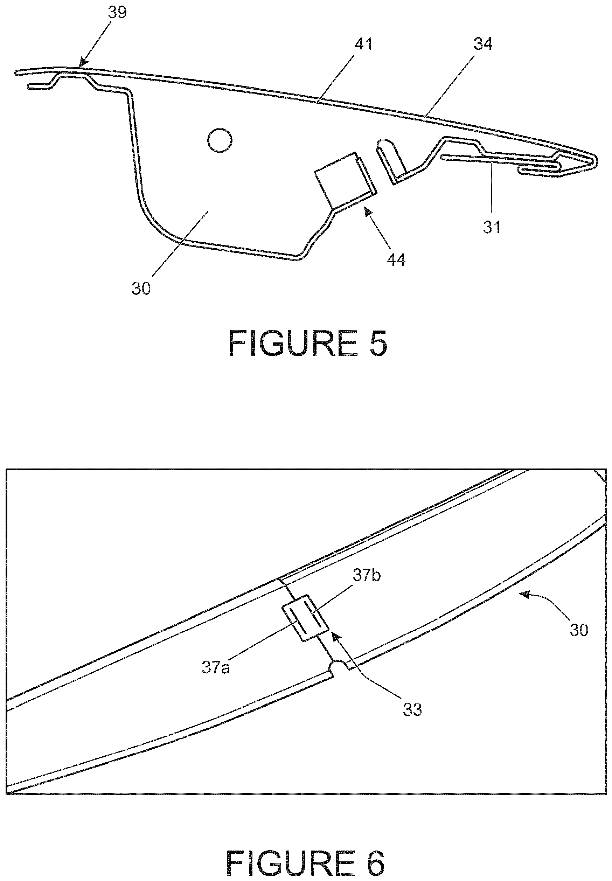

With reference to Figures 3 to 8, the roof system includes three main components; a front frame or headliner component 30, a rear frame component 60 and a waterproof cover or hood 34. As best seen in Figures 3 to 6, when fitted to the vehicle the front frame 30 extends transversely across the upper edge of the front vehicle windscreen frame 15 and provides an anchorage for the hood 34 at the front of the vehicle cabin. The front frame 30 is formed from a lightweight material, such as carbon fibre, and is formed in two parts so that it is foldable about a centrally mounted double hinge assembly 33 (as shown in Figure 6) mounted on the central axis 35 of the frame (i.e. the axis of the frame which extends longitudinally along the vehicle axis).

The double hinge assembly 33 is of conventional form and includes a first hinge plate mounted on one side of the front frame 30 and pivotal about a first hinge axis 37a for a for a first hinge pin, and a second hinge plate mounted on the other side of the frame 30 which is pivotal about a second hinge axis 37b for a second hinge pin. The double hinge assembly 33 allows one half of the front frame 30 to be folded back on itself about the first and second hinge axes 37a, 37b, bringing the two halves of the front frame 30 together, so that the front frame 30 can be stowed within a relatively small stowage space beneath the deck lid 22/trunk lid 24.

Referring specifically to Figure 5, the front edge of the hood 34 is attached to the front frame 30 via an elongate paddle 31 which extends along the full width of the vehicle windscreen 14. The paddle 31 is formed from a plastics material, such as ABS, to provide rigidity. The cover 34 is folded over the front edge of the frame 30 and is folded back underneath the front edge of the frame where it is stitched to the paddle 31 on its underside. The very edge of the cover 34 is double folded at the point of stitching to the paddle 31 to provide an extra secure attachment. An aluminium plate 41 completes the structure: this is sandwiched between the frame and the cover 34 to provide rigidity. At the rear edge 39 of the frame a series of bolt holes are provided (not shown) to allow fixings (also not shown) to secure the cover 34 to the frame 30 along the rear edge. The frame 30 and the cover 34 are therefore securely attached to one another so that when the frame 30 is detached from the vehicle and folded about the hinge assembly 33, the hood 34 is detached too and can be folded with the frame 30.

The hood 34 takes the form of a waterproof canvas which is easily foldable or rollable for stowage underneath the deck lid 22 with the front frame 30. An important distinction between the hood 34 in the invention and that used in other known convertible vehicles is that the hood 34 does not incorporate a panel to provide the rear vehicle windscreen; the hood in this invention is formed from a uniform sheet of material.

The hood 34 is a generally rectangular sheet of material which is shaped so as to cover substantially the full length and width of the vehicle cabin when the roof system is fitted on the vehicle to provide a ceiling for the cabin. The hood 34 includes a main portion which defines the ceiling of the cabin and, at the rear of the hood 34, is provided with left- and right-side hood wings 36, 38 respectively which extend rearwardly from the main portion of the hood to attach to tensioners 40, 42 mounted at tethering points on the left- and right-sides of the vehicle, respectively. The tensioners 40, 42 are mounted within the trunk of the vehicle, beneath the trunk lid 24, as described further below. The hood takes the form of what is commonly referred to as a "bimini" hood, which is a relatively lightweight style of roof often used on boats, for example.

The front frame 30 can be located on the upper edge of the windscreen frame 14 by means of two location pins (not shown) carried on the frame 30, which engage within respective recess (not shown) provided on the upper edge of the windscreen frame 14, one on either side of the hinge assembly. A clamp assembly 44, 46 is provided on each side of the central axis of the front frame 30 to clamp the front frame down onto the upper edge of the windscreen frame 14 once located in place with the location pins in the recesses. Each clamp assembly 44, 46 includes a user-operable handle 48, 50, a hook 52, 54 which engages within a respective recess 56, 58 on the upper edge of the windscreen frame 14, and a linkage (not visible in Figure 3) between the handle 48, 50 and the associated hook 52, 54. When the handle 48, 50 is operated by the user by pulling sideways, the coupling to the associated hook 52, 54 through the linkage causes the hook 52, 54 to rotate downwards into the recess 56, 58 to clamp the front frame 30 securely onto the windscreen frame 14. This type of locking assembly is generally known in the art and is of the type typically used in an automated manner on electronically controlled removable vehicle roofs.

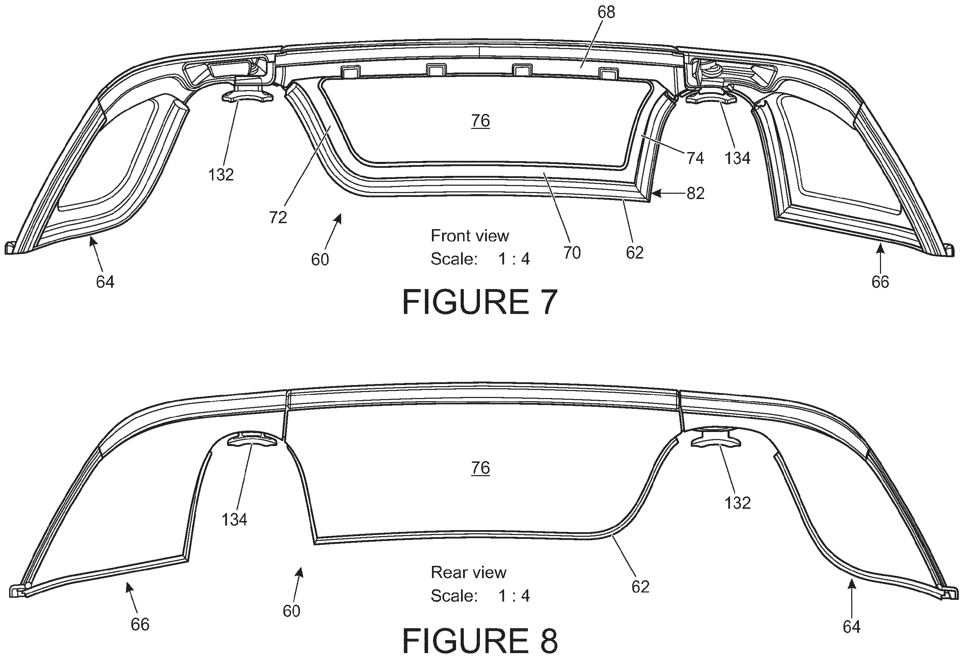

The rear frame 60 component of the roof system is shown in more detail in Figures 7 to 10. The rear frame 60 is a multi-section component and extends transversely across the vehicle, just rearward of the roll hoop 20 and the fairing front end 18a, to provide a support or fulcrum for the hood 34 at the rear of the vehicle cabin when the hood is stretched back from the front frame 30 to span the rear frame 60. The rear frame 60 spans the vehicle width in a transverse direction and is configured to engage with the roll hoop 20 and the fairing 18, in a sealing manner, when fitted to the vehicle.

The rear frame 60 includes three sections; a central frame section 62 and left- and right-side sections 64, 66 which are completely detachable from the central frame section 62 and which couple to the left- and right-sides of the central frame section 62, respectively, when the roof system is assembled on the vehicle. The frame sections 62, 64, 66 are formed for a lightweight material, such as carbon fibre, which also has high strength. The material of the frame sections is painted in the same finish as the vehicle body work to provide a coordinated appearance.

The central frame section 62 has a generally rectangular profile with substantially parallel upper and lower sides, 68, 70 respectively, and generally upright and outwardly sloping (from bottom to top) left- and right-side struts 72, 74 respectively. The central frame section 62 includes a translucent or tinted panel 76, typically formed from a polycarbonate material, which forms a window to the vehicle cabin to allow the vehicle driver a rear view when the roof system is fitted to the vehicle.

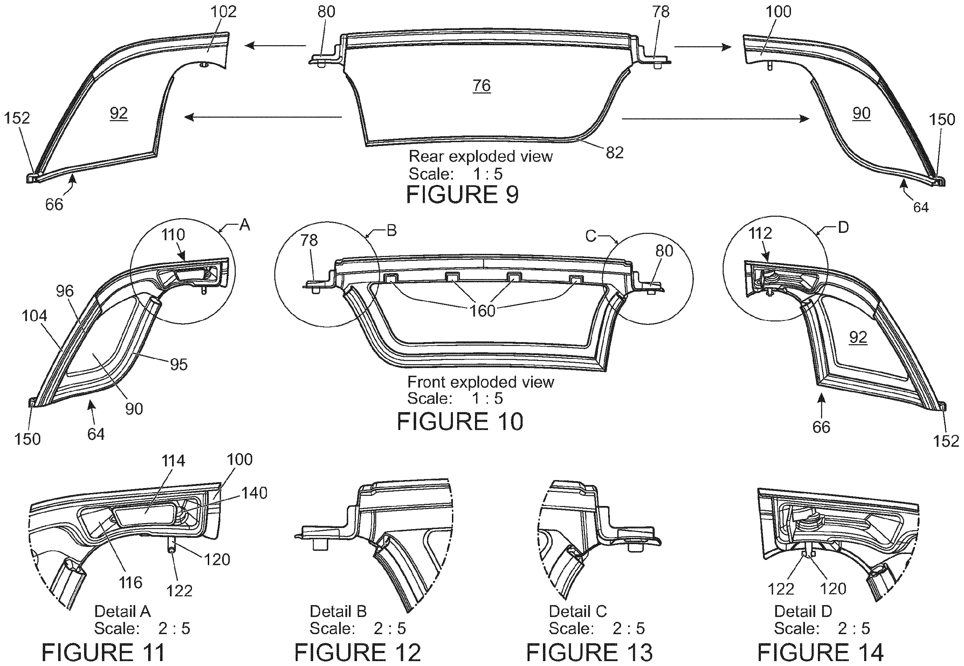

As can be best seen in the exploded view in Figures 9 and 10, flanges 78, 80 are provided, one at each outer upper edge of the central frame section 62, to form part of a coupling between the side frame sections 64, 66 and the central frame 62. The coupling also forms a part of a means for clamping the frame sections together, as described in further detail below.

In order to mount the rear frame 60 to the vehicle 10, the central frame section 62 is provided with a pair of pins or projection (not shown) along its lower edge 70 which form locating features for the central frame section 62. The pins cooperate with corresponding recesses (also not shown) on the upper surface of the vehicle body, between the fairing 18 and the roll hoop 20, to provide a means for positioning the central frame section 62 correctly on the vehicle as part of the assembly process.

The central frame section 62 is also provided with an elongate seal element 82 in the form of a bubble seal which extends around the lower side of the central frame section 62 and along the side struts 72, 74. A bubble seal is a well-known component in general and is a familiar component in vehicles. A bubble seal includes a seal element having two channels, one on either side of the element, with one channel being of limited depth matched to the dimensions of the frame component it receives and the channel on the other side of the element being deeper. The frame components are received within the channel on the narrow side in a sealing manner whilst the edges of the deeper channel are compressible upon engagement of the seal element with a corresponding part to form a seal between the frame and the corresponding part.

The left- and right-side frame sections 64, 66 of the rear frame 60 are similar to one another, but in reverse, with each being shaped appropriately to engage with the corresponding one of the fairing 18 and the roll hoop 20 on its inner side. Each side frame section 64, 66 houses a translucent or tinted panel 90, 92 of generally triangular form to provide additional visibility for the driver and passenger.

Considering the left-side frame section 64, the frame includes two generally upright struts; an inner upright strut 95 which abuts an outer side the fairing 18, and an outer upright strut 96. The left-side frame section 64 curves forwardly away from the central frame section 62 so that the outer upright strut 96 locates forward of the inner upright strut 95 when the rear frame is in place on the vehicle. The outer upright strut 96 therefore defines an abutment for the left side window 16 of the vehicle (as shown in Figure 1), when the window is wound-up.

A flange or arm region 100 extends inwardly from the upper side of the left-side frame section 64 to define an overhang which forms a coupling with the flange 78 on the left-side of the central frame section 62 and permits a clamping force to be transmitted through the left-side frame section 64 to the central frame section 62, as described in further detail below.

The right-side frame section 66 is similar to the left-side frame section 64, and thus provides an abutment for the right-side window of the vehicle at its outer upright strut, when the right side window is wound up. A flange 102 on the upper side of the right-side frame section 66 forms a coupling with the flange 80 on the right-side edge of the central frame 62 and, again, provides a means for transmitting a clamping force applied to the right-side frame section 66 to the central frame section 62.

Considering again the left-side frame section 64, a short length of seal element 104 in the form of a bubble seal is provided on the forward-facing edge of the outer upright 96. This provides a seal for the rear edge of the left side window 16 of the vehicle when the window is in a closed position, with the window being movable, vertically up and down, within a channel defined by the bubble seal.

In a similar manner, a longer length of seal element 104 in the form of a bubble seal extends along the lower edge of the left-side frame section 64, to engage with an upper surface of the vehicle bodywork on the left-side of the vehicle, and then vertically upwards along the inner upright strut 94 to engage with and seal against the fairing 18. The left-side frame section 64 therefore seals against the rear edge of the front left-side window 16, the upper surface of the vehicle bodywork on the left-side and with the fairing 18. The seal element 82 along the lower edge of the central frame section 62 engages with an upper surface of the vehicle body just rearward of and between the fairing 18 and the roll hoop 20 and forward of the deck lid 22. This arrangement of seals on the rear frame 60 ensures that the rear frame 60 is sealed against the vehicle entirely to prevent ingress of any fluid into the vehicle cabin between the fairing 18 and the frame 60, between the roll hoop 20 and the frame 60 and between the upper surface of the vehicle, along the vehicle sides and between the fairing 18 and the roll hoop 20, and the lower edges of the frame 60.

Referring in particular to Figures 10 to 14, the left- and right-side side frame sections 64, 66 are detachably coupled to the fairing 18 and the roll hoop 20, respectively, by means of two identical latching mechanisms 110, 112 provided on the respective flange or overhang 100, 102. The latching mechanisms are identical so only one will be described in detail.

Considering the left-side latching mechanism 110, the mechanism 110 includes a handle 114 which is operable between a closed, latched position (as shown in Figure 11) in which a clamping force is applied to the left-side latching mechanism 110 to clamp the left-side frame section 64 to the fairing 18, and an open, unlatched position in which the clamping force is removed from the left-side latching mechanism 110 and the left-side frame section 64 is disengaged from the fairing 18. The unlatched position of the latching mechanism 112 on the right-side is shown in Figure 12.

The handle 114 resides in a hollow 116 formed in the flange region 100 so that, when in the latched position, the handle 114 forms a discrete feature which does not detract from the aesthetics of the vehicle cabin. The latching mechanism 110 is convenient to operate either from within the vehicle cabin, or by leaning in through an open door of the vehicle.

With the left-side frame section 64 and the central frame section 62 mounted on the fairing 18, the flange 78 on the left-side outer edge of the central frame section 62 extends beneath the flange 100 on the left-side frame section 64. The coupling between the flanges 78, 100 ensures that, as the clamping force is applied to the left-side frame section 64, pulling it down onto the fairing 18, the central frame section 62 is pulled down with it by virtue of engagement between the flanges 78, 100.

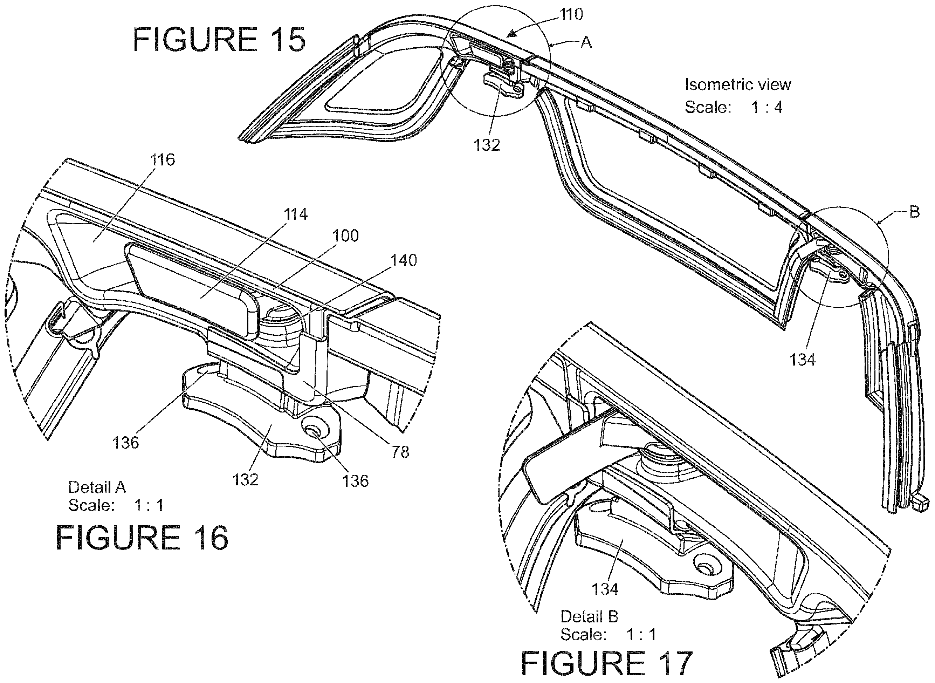

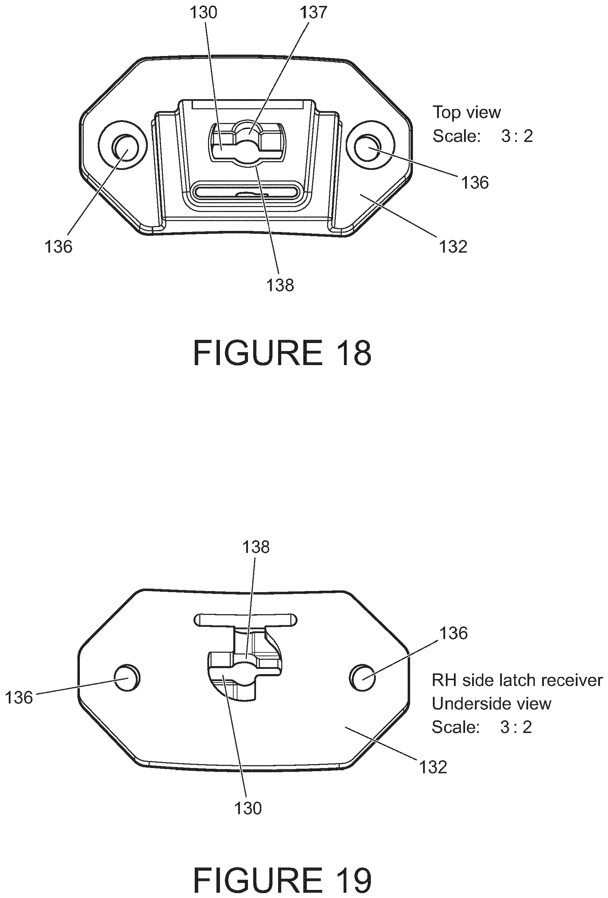

Referring in more detail to Figures 15 to 17, the left-side latching mechanism 100 includes a pin or projection 120 which is coupled to the handle 114 and takes the form of a quarter-turn fastener. The pin 120 includes an elongate stem and a cross bar 122 (as shown in Figure 14) which is located towards the lower end of the stem of the pin. As the handle 114 is operated, the pin is turned on its axis. Referring also to Figures 18 and 19, the pin 120 extends downwardly from the flange 100 of the left-side-frame section 64, through an opening (not shown) in the flange 78 of the central frame section 62 to engage within a recess 130 provided in an insert, or latch receiver 132, mounted to the fairing 18. As the pin 120 is rotated, it engages with a cam surface (not shown) of the recess 130 of the insert 132. As the pin rotates further and rides over the cam surface, this serves to draw the pin 120 and the insert 132 together with the pin 120 passing through the lower flange 78.

A similar insert 134 is mounted to the roll hoop 20 for receiving a pin of a right-side latching mechanism mounted on the flange 102 of the right-side frame section 66.

The lower end of the pin 120 engages within the recess 130 in the insert 132. The recess 130 is provided with a sloping surface 137 and a detent 138 at the lower end which is shaped to receive the cross bar 122 at the end of the pin 120. As the pin 120 moves rotates within the recess 130, it rides over the sloping surface 137 until it comes towards the end of its travel and has turned sufficiently about its axis to engage the cross bar 122 in the detent 138. This is the latched position of the mechanism 132 in which a clamping force is applied to the left-side frame section 64, thereby applying a clamping force to the left-side frame section 64 to clamp the section to the fairing 18. Via cooperation between the flange 100 of the left-side frame section 64 and the flange 78 on the central frame section 62, the central frame section 62 also experiences the clamping force to clamp the central frame section 62 to that region of the vehicle body between the fairing 18 and the roll hoop 20.

The pin 120 is resiliently biased upwardly from the recess 130 by means of a spring washer 140 (visible in Figure 14) so that a degree of force is required to push on the handle 114 to overcome the spring force when moving the handle 114 from the unlatched to the latched state. Once the spring force is overcome and the pin 120 is turned sufficiently to move it into the latched state within the detent 138, the pin 120 remains in position until the handle 114 is pulled horizontally out of the hollow 116, allowing the pin 120 to disengage from the detent 138 under the force of the spring washer 140 and unlatching the mechanism 110.

One insert 132, 134 is provided on each of the left- and right sides of the vehicle within the fairing 18 and the roll hoop 20, respectively, and is permanently secured thereto by means of screws (not shown) received through screw holes 136. Once the roof system is removed from the vehicle each insert 132, 134 lies substantially flush with the upper surface of the respective one of the fairing 18 or the roll hoop 20. The inserts 132, 134 are typically formed from a lightweight material, such as aluminium.

The right-side latching mechanism 112 is identical to the left-side latching mechanism 110 and operates in a similar way to clamp the right-side frame section 66 to the roll hoop 20 by operating the handle to move between the unlatched and latched states. The right-side latching mechanism 112 therefore applies a similar clamping force to the right-side frame section 66 and, hence, to the central frame section 62, via the flange 80 on the right-side outer edge of the central frame section 62.

As well as forming a part of the clamping means by which the frame sections are clamped to the vehicle, the pins of the latching mechanisms 110, 112 provide useful locating features to enable the side frame sections to be located in the correct position on the fairing 18 and the roll hoop 20 as part of the assembly process, by locating the pin loosely within the insert 132, 134 as the side frame sections are lowered onto the vehicle.

In addition to the pins on the side frame sections 64, 66 which engage in the inserts 132, 134, two further locating features in the form of outwardly extending feet 150, 152 are provided at the outer edges of each of the side frame sections, one foot being provided on each frame section. Each foot 150, 152 is shaped for engagement with a corner of the deck lid 22 where it meets with the upper surface of the vehicle side, at the front of the deck lid 22. In addition to providing a locating feature for the rear frame 60, the feet 150, 152 also serve to limit any forward (i.e. towards the front of the vehicle) and outwardly transverse movement of the roof system relative to the vehicle, in use.

From the foregoing description it will be appreciated that with the rear frame section 60 clamped down onto the vehicle, the roof system is prevented from moving relative to the vehicle by several factors. Because the structure of the fairing 18 tapers rearwardly along the vehicle axis, and the rear frame 60 engages with the fairing 18 behind the taller front end of the fairing 18a, the rear frame 60 is prevented from moving forwards. Also, the clamping force provided by the latching mechanisms 110, 112 pulls the hood 34 securely onto the vehicle body. In addition, the feet 150, 152 at the outer edges of the side sections 64, 66 engaging with the deck lid 24 prevent forward (i.e. towards the front of the vehicle) and outwardly transverse movement of the hood 34. Finally, friction between the seal elements 82, 94 and the upper surface of the vehicle body, and between the seal elements and the fairing 18 and the roll hoop 20, also serves to prevent unwanted movement of the hood 34.

A further feature of the roof system is that that once the rear frame 60 is mounted onto the vehicle body, there is no part of the frame which engages with the vehicle body, because the seal elements 82, 94 prevent such contact. This ensures that no damage can be caused to the vehicle body by the frame (e.g. through scratching), so that even when the roof system is detached from the vehicle the aesthetic appearance of the vehicle body work is not compromised.

With the rear frame 60 clamped on the vehicle, the hood 34 can be pulled back over the rear frame 60 and the wings 36, 38 of the hood can be secured to the tensioners 40, 42 located within the vehicle trunk. The upper edge of the central frame section 62 is provided with a plurality of castellations or projections 160 (four are shown in Figure 8) which extend forward from the upper edge to define a means for attachment for the hood 34. For this purpose the hood 34 is provided with a plurality of loops on its underside (i.e. the side of the cover which forms the ceiling of the vehicle cabin when in situ) so that, when the hood 34 is laid over the upper edge of the central frame section 62 the loops can be hooked over the projections 160 to secure the hood 34 to the rear frame 60. In another arrangement, the underside of the hood 34 may be provided with hooks or pegs which cooperate with corresponding holes provided along the upper edge of the central frame section 62.

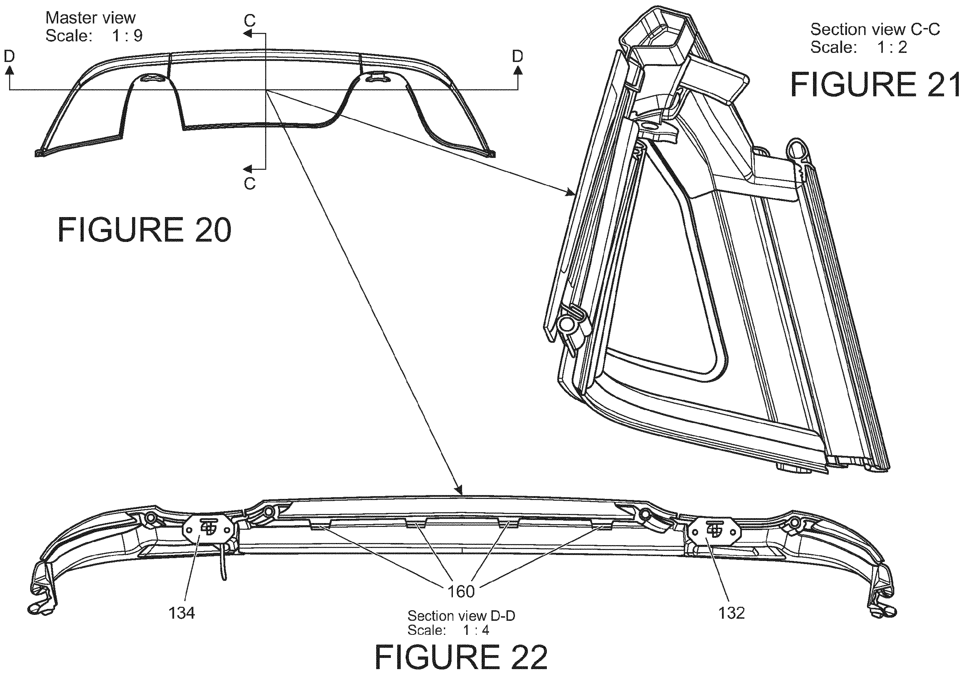

Figures 20 to 22 show the same embodiment as that shown in previous figures, with like parts being referred to with like reference numbers.

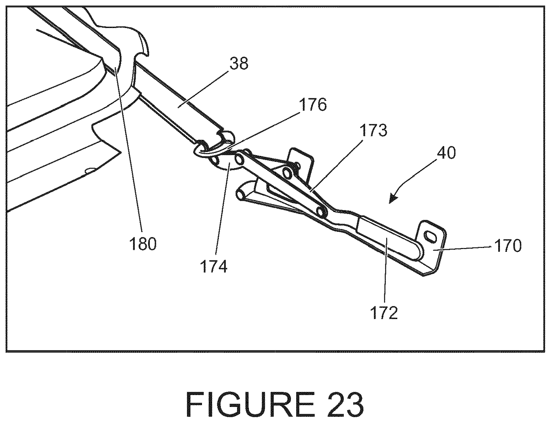

Referring to Figure 23, the left-side tensioner 42 for the hood 34 includes a metal plate 170 which is securely attached to the vehicle body on the left-hand side within the vehicle trunk. A lever 172 is pivotally mounted to the metal plate 170, and a linkage 173 couples the lever to a hook 174 at the end of the tensioner 42. The hook 174 at the end of the tensioner 42 is cooperable with an eye 176 attached to an end of the wing 38 of the hood 34.

In order to attach the wing 38 of the hood 34 to the tensioner 42, the trunk lid 24 is raised by pivoting along its rear edge, opening a gap in the region 180 (shown in Figures 1 and 23) defined at the rear edge of the trunk lid 24 for the wing 38 to pass through. The wing 38 is passed through the gap 180 and the lever 172 of the tensioner 42 is pulled upwardly to push the hook 174 forward, thereby enabling the eye 176 on the wing 38 to be hooked over the hook 174. The lever 172 is then pushed down to retract the hook 174 via the linkage, with the result that the wing 38 is pulled taut. Each wing 38 of the hood at the rear is provided with a steel cable or thread along both the outboard and inboard edges so as to maintain the wing taut and substantially flat when under tension.

To detach the hood 34 from the tensioner 42, the lever 172 is pulled up again, pushing the hook 174 forward to release tension in the wing 38 and allowing the eye 176 of the wing 38 to be removed from the hook 174 so the hood 34 can be detached.

The right-side tensioner 40 on the right-side of the vehicle is identical to the left-side tensioner 42 and can be operated in a similar manner to allow attaching and detaching of the wing 36 of the hood 34 on the right-hand side of the vehicle.

The sequence of steps which are performed to mount the roof system to the vehicle will now be described in further detail.

Initially, the front frame 30 is removed from the stowage space and is unfolded about the double hinge assembly. When stowed, the hood 34 is typically folded or rolled around the hood 34 and must be unrolled or unfolded to fit the front frame 30. The sections of the rear frame 60 are also removed from the stowage space.

The front frame 30 is then placed on the upper edge of the front windscreen frame 14, locating the pins on the front frame within the holes of the windscreen frame 14 to locate the front frame 30 correctly. The clamp assemblies, 52, 56 and 54, 58, are then operated to pull the front frame 30 down onto the windscreen frame 14 to provide a secure attachment.

The central frame section 62 is positioned on the upper surface of the vehicle, between the fairing 18 and the roll hoop 20 just forward from the deck lid 22, using engagement between the locating features and the recesses to position the central frame section 62 correctly. The left- and right-side frame sections 64, 66 are then placed on the fairing 18 and the roll hoop 20 respectively, using the pins 120 of the latching mechanisms 110, 112 to locate the frame sections 64, 66 correctly through cooperation with the inserts 132, 134. The feet 150, 152 on the outer edge of each side frame section 64, 66 are engage with the front corners of the deck lid 22. The handle 114 of each latching mechanism 110, 112 is then operated to push the respective pin 120 down into the detent 138 of the recess 130 in the insert 132, 134, over-coming the force of the spring washer 140 and 'clamping' the side frame sections 64, 66 onto the central frame section 62, and hence to the vehicle, in a sealing manner by virtue of the seal elements 82, 94.

Once the rear frame 60 is sealed against the fairing 18, the roll hoop 20 and the upper surface of the vehicle body, the hood 34 can be pulled back from the front frame 30, rearwards over the rear frame 60 and further rearwards towards the vehicle boot. The rear frame 60 therefore provides a fulcrum for the hood 34, with the loops on the underside of the hood being engaged with the projections 160 on the central frame section 62 to ensure the hood 34 remains secure and provides a taut ceiling to the cabin. The wings 36, 38 of the hood 34 are unravelled and can be fed through the openings 180 on each side of the trunk lid 24 with the trunk lid open. The eyes 176 on the end of the wings 36, 38 can then be attached to the tensioners 40, 42, as described previously, before lowering the levers 172 of the tensioners 40, 42 to tension the wings 36, 38 fully.

In order to remove the roof system from the vehicle, the sequence of steps described above is carried out in reverse. The tensioners 40, 42 are released to allow the wings 36, 38 of the hood 34 to be unhooked. The hood 34 is removed from the rear frame 60 by releasing the latching mechanisms 110, 112 by pulling on the handles and moving them into the unlatched positions, and the loops on the hood 34 are unhooked from the projections 160. Aided by the force of the spring washer 140, the pins 120 are released from their recesses 130, removing the clamping force from the frame sections 60, 64, 66 and allowing all three frame sections to be removed from the rear of the vehicle and place in the stowage space beneath the deck lid 22. In a similar manner, the front frame 30 component can be removed from the front windscreen 14 by operating the left- and right-side handles 56, 58 to disengage each hook 52, 54 from its recess. Once the clamping force is removed from the front frame 30 the frame can be removed and folded into two halves, by virtue of the double hinge assembly, for stowage under the deck lid 22.

A particular benefit of the roof system is its compact nature when removed from the vehicle, by virtue of the double hinge assembly on the front frame 30 and the multi-section nature of the rear frame 60. In a sports vehicle the volume for storage within the vehicle is relatively small, and so the compact nature of the assembly is critical and allows for stowage beneath the deck lid 22. Moreover, because the rear frame 60 is formed from a lightweight material, carriage of the roof system within the storage compartment, or when fitted to the vehicle, does not appreciably increase the overall vehicle weight. Thus, vehicle performance is not affected detrimentally by carrying the roof system.

A further advantage of the invention resides in the straightforward method of assembly. The rear frame 60, whilst formed from three components, includes an integral window 76 in the central frame section 62, rather than this being a separate part as on other known convertible vehicles. Furthermore, because the vehicle screen 76 is a polycarbonate structure, rather than being formed from a fabric as in known vehicles, the structure of the rear frame 60 which supports it can be kept relatively lightweight. In addition, the means by which the three sections are assembled together is straightforward and relies only on a simple clamping force applied through the side-frame sections 64, 66 to the central frame section 62.

The features and advantages provided by the roof system are particularly suitable for use on sports or high performance vehicles of the type described previously. Such vehicles typically include one or two roll hoops, or a fairing and a roll hoop as described above. In a twin roll hoop version of the vehicle, the rear frame has a similar structure, but the side sections are shaped slightly differently, and substantially symmetrically, to cooperate with the overall profile of the two identical roll hoops. In a vehicle without an aerodynamic or safety structure, such as a fairing or a roll hoop, the central frame section 62 and the left-and right-frame sections 64, 66 of the rear frame are shaped so as the engage with one another if the rear frame 60 is formed in multiple parts. This may be beneficial compared with having a unitary rear frame structure, because it allows the roof system to be accommodated within a smaller storage volume when removed from the vehicle and disassembled.

It will be appreciated by a person skilled in the art that the invention could be modified to take many alternative forms without departing from the scope of the appended claims.

## Claims

1. A detachable roof system for a convertible vehicle (10) having an open state in which a vehicle cabin is open and a closed state in which the vehicle cabin is closed; the roof system including:
a front frame (30) which is removably mountable to the vehicle at the front of the vehicle cabin;
a foldable or rollable hood (34) for covering the cabin in the closed state, wherein
the hood (34) is attached permanently to the front frame (30); and **characterized by**
a rear frame (60), separate from the front frame (30), which is removably mountable to the vehicle at the rear of the vehicle cabin, the rear frame including an integral panel (76) which forms a rear window of the vehicle when the rear frame is mounted on the vehicle,
wherein the rear frame (60) provides a rigid support for the hood (34) which spans the rear frame (60) when the hood (34) covers the cabin, and wherein the rear frame (60) is not permanently attached to the hood (34).

2. The roof system as claimed in claim 1, including clamping means (114, 120, 122, 140) configured to apply a clamping force to the rear frame (60) to clamp the rear frame (60) to the vehicle (10).

3. The roof system as claimed in claim 2, wherein the rear frame (60) includes a plurality of separable frame sections (62, 64, 66).

4. The roof system as claimed in claim 3, wherein the clamping means includes a coupling means (78, 80, 100) for coupling the frame sections (62, 64, 66) together, the clamping means being configured to apply the clamping force to the coupling means so as to transmit the clamping force through one frame section to another frame section, thereby to clamp both sections to the vehicle (10).

5. The roof system as claimed in claim 4, wherein the rear frame (60) includes a central frame section (62) and left- and right-side frame sections (64, 66).

6. The roof system as claimed in claim 5, wherein the coupling means includes a flange (100) provided on each of the left- and right-side frame sections (64, 66) and a flange (78, 80) provided on the central frame section (62), the flanges being cooperable with one another when the frame sections are placed onto the vehicle so that the clamping force applied to the left- and right- side sections (64, 66) is transmitted to the central frame section (62).

7. The roof system as claimed in claim 5 or claim 6, wherein the clamping means comprises a first latching mechanism (114, 120, 122), operable between latched and unlatched states, and a second latching mechanism (114, 120, 122), operable between latched and unlatched states, the first latching mechanism being associated with the left-side frame section (64) and the second latching mechanism being associated with the right-side frame section (66), whereby operation of the first and second latching mechanisms serves to apply the clamping force to the side frame sections.

8. The roof system as claimed in claim 7, wherein each of the first and second latching mechanisms includes a resiliently-biased pin (120) which, when in the latched state, engages with a latch receiver (132, 134) provided on the vehicle, the pin (120) being resiliently biased into the unlatched state.

9. The roof system as claimed in claim 7 or claim 8, wherein the first and second latching mechanisms include a handle (114) which is operable to cause movement of the pin (120) between the latched and unlatched states through an intermediate linkage.

10. The roof system as claimed in any of claims 4 to 9, wherein the rear frame (60) comprises a seal arrangement (70, 72, 74, 95, 104) for engaging with an upper surface of the vehicle body under the clamping force when the roof system is mounted on the vehicle, thereby to form a substantially fluid-tight seal between the seal arrangement (70, 72, 74) and the vehicle.

11. The roof system as claimed in any of claims 1 to 10, wherein the rear frame (60) comprises means (150, 152) configured to prevent outward transverse movement of the roof system relative to the vehicle when the roof system is fitted on the vehicle.

12. The roof system as claimed in claim 11, wherein said means includes a foot (150, 152) located at an outer edge of the rear frame (60) on the left and right sides (64, 66) thereof, each foot being cooperable with an upper lid (22) of the vehicle when the roof system is fitted to the vehicle, in use, to prevent said movement.

13. The roof system as claimed in any of claims 1 to 12, wherein the front frame (30) is a foldable frame.

14. The roof system as claimed in any one of the preceding Claims, wherein the rear frame (60) comprises at least two separate frame sections (62, 64, 66), and the roof system comprises a clamping means (114, 120, 122, 140) configured to apply a clamping force to one of the frame sections and to transmit the clamping force through the or each of the other frame sections so as to clamp the entire frame to the vehicle.

15. A convertible vehicle (10) comprising a roof system as claimed in any of claims 1 to 14.

## Patentansprüche

1. Abnehmbares Dachsystem für ein umwandelbares Fahrzeug (10), das einen offenen Zustand, in dem ein Fahrzeuginnenraum geöffnet ist, und einen geschlossenen Zustand, in dem der Fahrzeuginnenraum geschlossen ist, aufweist; wobei das Dachsystem Folgendes beinhaltet:
einen Vorderrahmen (30), der an dem Fahrzeug an der Vorderseite des Fahrzeuginnenraums entfernbar montierbar ist;
ein klappbares oder aufrollbares Verdeck (34) zum Abdecken des Innenraums in dem geschlossenen Zustand, wobei das Verdeck (34) an dem Vorderrahmen (30) fest befestigt ist; und
**gekennzeichnet durch** einen Heckrahmen (30), der von dem Vorderrahmen (60) getrennt ist, der an dem Fahrzeug an der Heckseite des Fahrzeuginnenraums entfernbar montierbar ist, wobei der Heckrahmen eine einstückige Platte (76) beinhaltet, die ein Heckfenster des Fahrzeugs ausbildet, wenn der Heckrahmen an dem Fahrzeug montiert ist,
wobei der Heckrahmen (60) eine starre Abstützung für das Verdeck (34) bereitstellt, die den Heckrahmen (60) überspannt, wenn das Verdeck (34) den Innenraum abdeckt, und wobei der Heckrahmen (60) nicht mit dem Verdeck (34) fest befestigt ist.

2. Dachsystem nach Anspruch 1, das Klemmmittel (114, 120, 122, 140) beinhaltet, die konfiguriert sind, um eine Klemmkraft auf den Heckrahmen (60) auszuüben, um den Heckrahmen (60) an dem Fahrzeug (10) zu klemmen.

3. Dachsystem nach Anspruch 2, wobei der Heckrahmen (60) mehrere trennbare Rahmenabschnitte (62, 64, 66) beinhaltet.

4. Dachsystem nach Anspruch 3, wobei die Klemmmittel ein Kopplungsmittel (78, 80, 100) zum miteinander Koppeln der Rahmenabschnitte (62, 64, 66) beinhalten, wobei die Klemmmittel konfiguriert sind, um die Klemmkraft auf die Kopplungsmittel auszuüben, um die Klemmkraft durch einen Rahmenabschnitt auf einen anderen Rahmenabschnitt zu übertragen, wobei dadurch beide Abschnitte an das Fahrzeug (10) geklemmt werden.

5. Dachsystem nach Anspruch 4, wobei der Heckrahmen (60) einen mittleren Rahmenabschnitt (62) und links- und rechtsseitige Rahmenabschnitte (64, 66) beinhaltet.

6. Dachsystem nach Anspruch 5, wobei die Kopplungsmittel einen Flansch (100), der an jedem der links- und der rechtsseitigen Rahmenabschnitte (64, 66) bereitgestellt ist, und einen Flansch (78, 80), der an dem mittleren Rahmenabschnitt (62) bereitgestellt ist, beinhalten, wobei die Flansche beim Aufsetzen der Rahmenabschnitte auf das Fahrzeug miteinander zusammenwirken, so dass die auf die links- und die rechtsseitigen Abschnitte (64, 66) ausgeübte Klemmkraft auf den mittleren Rahmenabschnitt (62) übertragen wird.

7. Dachsystem nach Anspruch 5 oder 6, wobei die Klemmmittel einen ersten Verriegelungsmechanismus (114, 120, 122), der zwischen verriegelten und entriegelten Zuständen betriebsfähig ist, und einen zweiten Verriegelungsmechanismus (114, 120, 122), der zwischen verriegelten und entriegelten Zuständen betriebsfähig ist, umfassen, wobei der erste Verriegelungsmechanismus mit dem linksseitigen Rahmenabschnitt (64) verknüpft wird und der zweite Verriegelungsmechanismus mit dem rechtsseitigen Rahmenabschnitt (66) verknüpft wird, wodurch ein Betreiben des ersten und des zweiten Verriegelungsmechanismus dazu dient, die Klemmkraft auf die seitlichen Rahmenabschnitten auszuüben.

8. Dachsystem nach Anspruch 7, wobei jeder der ersten und der zweiten Verriegelungsmechanismen einen elastisch vorgespannten Stift (120) beinhaltet, der in dem verriegelten Zustand eine an dem Fahrzeug bereitgestellten Verriegelungsaufnahme (132, 134) in Eingriff nimmt, wobei der Stift (120) in dem entriegelten Zustand elastisch vorgespannt ist.

9. Dachsystem nach Anspruch 7 oder 8, wobei der erste und der zweite Verriegelungsmechanismus einen Griff (114) beinhalten, der betriebsfähig ist, um eine Bewegung des Stifts (120) zwischen dem verriegelten und dem entriegelten Zustand durch eine Zwischenverbindung zu verursachen.

10. Dachsystem nach einem der Ansprüche 4 bis 9, wobei der Heckrahmen (60) eine Dichtungsanordnung (70, 72, 74, 95, 104) zum Ineingriffnehmen einer oberen Oberfläche der Fahrzeugkarosserie unter der Klemmkraft umfasst, wenn das Dachsystem an dem Fahrzeug montiert ist, wobei dadurch eine im Wesentlichen flüssigkeitsdichte Dichtung zwischen der Dichtungsanordnung (70, 72, 74) und dem Fahrzeug ausgebildet wird.

11. Dachsystem nach einem der Ansprüche 1 bis 10, wobei der Heckrahmen (60) Mittel (150, 152) umfasst, die konfiguriert sind, um eine nach außen gerichtete Querbewegung des Dachsystems relativ zu dem Fahrzeug zu verhindern, wenn das Dachsystem an dem Fahrzeug angebracht ist.

12. Dachsystem nach Anspruch 11, wobei die Mittel einen Fuß (150, 152) beinhalten, der an einer Außenkante des Heckrahmens (60) auf der linken und der rechten Seite (64, 66) davon gelegen ist, wobei jeder Fuß mit einem oberen Deckel (22) des Fahrzeugs zusammenwirkt, wenn das Dachsystem in Verwendung an das Fahrzeug angebracht ist, um die Bewegung zu verhindern.

13. Dachsystem nach einem der Ansprüche 1 bis 12, wobei der Vorderrahmen (30) ein faltbarer Rahmen ist.

14. Dachsystem nach einem der vorhergehenden Ansprüche, wobei der Heckrahmen (60) wenigstens zwei getrennte Rahmenabschnitte (62, 64, 66) umfasst, und das Dachsystem Klemmmittel (114, 120, 122, 140) umfasst, die konfiguriert sind, um eine Klemmkraft auf einen der Rahmenabschnitte auszuüben und die Klemmkraft durch den oder jeden der anderen Rahmenabschnitte zu übertragen, um den gesamten Rahmen an das Fahrzeug zu klemmen.

15. Umwandelbares Fahrzeug (10), das ein Dachsystem nach einem der Ansprüche 1 bis 14 umfasst.

## Revendications

1. Système de toit amovible pour un véhicule décapotable (10) ayant un état ouvert dans lequel un habitacle de véhicule est ouvert et un état fermé dans lequel l'habitacle de véhicule est fermé ; le système de toit comportant :
un cadre avant (30) qui peut être monté de manière amovible sur le véhicule à l'avant de l'habitacle du véhicule ;
une capote (34) pliable ou enroulable pour couvrir l'habitacle à l'état fermé, la capote (34) étant fixée de façon permanente au cadre avant (30) ; et **caractérisé par** un cadre arrière (60), séparé du cadre avant (30), qui peut être monté de manière amovible sur le véhicule à l'arrière de l'habitacle du véhicule, le cadre arrière comportant un panneau intégré (76) qui forme une lunette arrière du véhicule lorsque le cadre arrière est monté sur le véhicule,
le cadre arrière (60) fournissant un support rigide pour la capote (34) qui recouvre le cadre arrière (60) lorsque la capote (34) recouvre l'habitacle, et le cadre arrière (60) n'étant pas fixé de façon permanente à la capote (34).

2. Système de toit selon la revendication 1, comportant des moyens de serrage (114, 120, 122, 140) conçus pour appliquer une force de serrage au cadre arrière (60) afin de serrer le cadre arrière (60) sur le véhicule (10).

3. Système de toit selon la revendication 2, dans lequel le cadre arrière (60) comporte une pluralité de sections de cadre séparables (62, 64, 66).

4. Système de toit selon la revendication 3, dans lequel les moyens de serrage comportent des moyens d'accouplement (78, 80, 100) pour accoupler les sections de cadre (62, 64, 66) ensemble, les moyens de serrage étant conçus pour appliquer la force de serrage aux moyens d'accouplement de manière à transmettre la force de serrage à travers une section de cadre à une autre section de cadre, pour serrer ainsi les deux sections sur le véhicule (10).

5. Système de toit selon la revendication 4, dans lequel le cadre arrière (60) comporte une section de cadre centrale (62) et des sections de cadre latérales gauche et droite (64, 66).

6. Système de toit selon la revendication 5, dans lequel les moyens d'accouplement comportent une bride (100) fournie sur chacune des sections de cadre latérales gauche et droite (64, 66) et une bride (78, 80) fournie sur la section de cadre centrale (62), les brides pouvant coopérer les unes avec les autres lorsque les sections de cadre sont placées sur le véhicule de telle sorte que la force de serrage appliquée aux sections latérales gauche et droite (64, 66) est transmise à la section de cadre centrale (62).

7. Système de toit selon la revendication 5 ou la revendication 6, dans lequel les moyens de serrage comprennent un premier mécanisme de verrouillage (114, 120, 122), pouvant fonctionner entre les états verrouillé et déverrouillé, et un second mécanisme de verrouillage (114, 120, 122), pouvant fonctionner entre les états verrouillé et déverrouillé, le premier mécanisme de verrouillage étant associé à la section de cadre latérale gauche (64) et le second mécanisme de verrouillage étant associé à la section de cadre latérale droite (66), moyennant quoi le fonctionnement des premier et second mécanismes de verrouillage sert à appliquer la force de serrage aux sections latérales du cadre.

8. Système de toit selon la revendication 7, dans lequel chacun des premier et second mécanismes de verrouillage comporte une goupille sollicitée élastiquement (120) qui, lorsqu'elle est à l'état verrouillé, vient en prise avec un récepteur de verrouillage (132, 134) fourni sur le véhicule, la goupille (120) étant sollicitée élastiquement dans l'état déverrouillé.

9. Système de toit selon la revendication 7 ou la revendication 8, dans lequel les premier et second mécanismes de verrouillage comportent une poignée (114) qui peut fonctionner pour amener le mouvement de la goupille (120) entre les états verrouillé et déverrouillé à travers une tringlerie intermédiaire.

10. Système de toit selon l'une quelconque des revendications 4 à 9, dans lequel le cadre arrière (60) comprend un agencement d'étanchéité (70, 72, 74, 95, 104) pour venir en prise avec une surface supérieure de la carrosserie du véhicule sous la force de serrage lorsque le système de toit est monté sur le véhicule, pour former ainsi un joint sensiblement étanche aux fluides entre l'agencement de joint (70, 72, 74) et le véhicule.

11. Système de toit selon l'une quelconque des revendications 1 à 10, dans lequel le cadre arrière (60) comprend des moyens (150, 152) conçus pour empêcher le mouvement transversal vers l'extérieur du système de toit par rapport au véhicule lorsque le système de toit est installé sur le véhicule.

12. Système de toit selon la revendication 11, dans lequel lesdits moyens comportent un pied (150, 152) situé à un bord externe du cadre arrière (60) sur les côtés gauche et droit (64, 66) de celui-ci, chaque pied pouvant coopérer avec un couvercle supérieur (22) du véhicule lorsque le système de toit est installé sur le véhicule, en cours d'utilisation, pour empêcher ledit mouvement.

13. Système de toit selon l'une quelconque des revendications 1 à 12, dans lequel le cadre avant (30) est un cadre pliable.

14. Système de toit selon l'une quelconque des revendications précédentes, dans lequel le cadre arrière (60) comprend au moins deux sections de cadre séparées (62, 64, 66), et le système de toit comprend des moyens de serrage (114, 120, 122, 140) conçus pour appliquer une force de serrage à l'une des sections de cadre et pour transmettre la force de serrage à travers la section de cadre ou chacune des autres sections de cadre de manière à serrer l'ensemble du cadre sur le véhicule.

15. Véhicule décapotable (10) comprenant un système de toit selon l'une quelconque des revendications 1 à 14.
